# EUROPEAN PATENT SPECIFICATION

(11) **EP 3 219 546 B1**
(45) Date of publication and mention of the grant of the patent: **19.06.2019**
(21) Application number: 17161231.0
(22) Date of filing: 16.03.2017
(51) Int. Cl.: B62J 17/00, B60Q 1/00, B60Q 1/04, B62J 6/02, B62K 5/027, B62K 5/08, B62K 5/10, B62D 61/06, F21S 41/147, B62K 5/05

(54) **LEANING VEHICLE**
NEIGEFAHRZEUG
VÉHICULE À INCLINAISON

(30) Priority: 18.03.2016 JP 2016055046; 07.12.2016 JP 2016237442
(43) Date of publication of application: 20.09.2017
(73) Proprietor: Yamaha Hatsudoki Kabushiki Kaisha, Iwata-shi, Shizuoka 438-8501 (JP)
(72) Inventor: SASAKI, Kaoru, Iwata-shi, Shizuoka 438-8501 (JP)
(74) Representative: Grünecker Patent- und Rechtsanwälte PartG mbB

(56) References cited:
- EP-A1- 2 669 163
- EP-A1- 2 792 546
- EP-A2- 0 894 664
- EP-A2- 2 669 116
- WO-A1-2015/190112
- WO-A1-2015/190113
- JP-A- 2014 166 782
- JP-A- 2015 137 031
- JP-A- 2016 015 303
- US-A1- 2015 124 467

## Description

The invention relates generally to leaning vehicles. More particularly, the invention relates to a leaning vehicle that includes two front wheels and a headlamp and leans rightward in making a right turn and leftward in making a left turn.

Prior art document WO 2015/190112 A1 discloses a leaning vehicle configured to lean rightward in making a right turn and to lean leftward in making a left turn. The vehicle comprises a body frame including a head pipe and a steering shaft rotatably supported by the head pipe. A headlamp split into a left side headlamp and a right side headlamp. Said left side headlamp and said right side headlamp are connected to each other. Said connecting portion is located on the vehicle center line. The headlamp includes an upper light source with an optical lens portion and a lower light source with an optical lens portion. Said headlamp is configured to maintain the light distribution sought in the vehicle, suppress an increase in the size of the vehicle, and improve visibility of the vehicle from the outside. The distance between a first optical lens portion of a first high-directivity light portion and a second optical lens portion of a second high-directivity light portion is configured to be smaller than half of the length in the left-right direction of the vehicle between the left end of a lower portion of a front left wheel support device and the right end of a lower portion of a front right wheel support device, and larger than half of the smaller one of either the minimum width of the optical lens portion of the first high-directivity light portion and the minimum width of the optical lens portion of the second high-directivity light portion. Furthermore, a configuration is adopted whereby a portion of light shone through the optical lens portion of the first high-directivity light portion overlaps with light shone through the optical lens portion of the second high-directivity light portion, and the remaining portion does not overlap.

A leaning vehicle known in the art includes two front wheels and a headlamp and leans rightward in making a right turn and leftward in making a left turn. Such a leaning vehicle is described in, for example, US D547,242 S1 and "CATALOGO PARTI DI RICAMBIO", MP3 300 ie LT Mod. ZAPM64102, Piaggio.

The leaning vehicle described in each of the documents includes a headlamp disposed at a relatively high position. This unfortunately reduces the difference between an angle that the axis of light emitted from the headlamp forms with the ground and an angle that the line of sight of a rider looking at the ground forms with the ground. For example, suppose that a bump is present on the ground in front of the leaning vehicle. In such a case, the bump is illuminated with light emitted from the headlamp, which casts a shadow in front of the bump. The rider visually identifies the shadow and thus easily recognizes the bump. When the difference between the above-mentioned angles is small, however, the rider is able to easily recognize the bump itself but is more unlikely to visually identify the shadow of the bump than when the difference between the above-mentioned angles is large.

A leaning vehicle including two front wheels may be provided with a headlamp at the widthwise center of the vehicle, thus enabling the headlamp to be disposed at a low position while allowing the front wheels to have a sufficient stroke amount. When a leaning vehicle including two front wheels and configured to lean is provided with a headlamp at a low position, the leaning vehicle has new problems described below.

To make the front portion of the vehicle compact in, in particular, vehicle width size while making the most of the advantage of having two front wheels, the distance between the two front wheels (i.e., a tread width) is preferably kept as small as possible. However, when the body frame of the leaning vehicle having a small tread width and configured to lean is leaned, one of the front wheels, one of front wheel suspensions, and/or one of steering devices move(s) upward in the up-down direction of the body frame and come(s) closer to the widthwise center of the vehicle. Thus, when the body frame leans, the headlamp disposed at a low position may disadvantageously interfere with the front wheel, the front wheel suspension, and/or the steering device. One solution to this interference is to reduce the size of the headlamp. Such a solution, however, makes it difficult to create a sufficient area for the reflector(s) of the headlamp.

It is an object of the present invention to provide a leaning vehicle that includes two front wheels and a leanable body frame and enables not only a reduction in tread width but also disposition of a headlamp at a low position, in addition to having a sufficient area for reflectors of the headlamp. According to the present invention said object is solved by a leaning vehicle having the features of independent claim 1. Preferred embodiments are laid down in the dependent claims.

A leaning vehicle according to an embodiment leans rightward in making a right turn and leans leftward in making a left turn. The leaning vehicle includes a body frame, a steering shaft, a left front wheel, a right front wheel, a left front wheel support, a right front wheel support, a left side member, a right side member, a link mechanism, a front cover, and a headlamp. The body frame includes a head pipe. The steering shaft is rotatably supported by the head pipe. The left front wheel is disposed to the left of a vehicle center line. The right front wheel is disposed to the right of the vehicle center line. The left front wheel support supports the left front wheel such that the left front wheel is rotatable. The right front wheel support supports the right front wheel such that the right front wheel is rotatable. The left side member supports the left front wheel support such that the left front wheel support is rotatable around a left steering axis extending in an up-down direction of the body frame. The right side member supports the right front wheel support such that the right front wheel support is rotatable around a right steering axis extending in the up-down direction of the body frame. The link mechanism is coupled to the body frame, the left side member, and the right side member such that the link mechanism is rotatable relative to the body frame, the left side member, and the right side member around link axes extending in a front-rear direction of the body frame. The link mechanism is configured to change relative positions of the left front wheel and the right front wheel in the up-down direction of the body frame in accordance with a lean of the body frame. The front cover is secured to the body frame. At least a portion of the front cover is disposed forward of the steering shaft and the link mechanism. The headlamp is attached to the front cover. At least a portion of the headlamp is located on the vehicle center line. The headlamp is disposed forward of the link mechanism in the front-rear direction of the body frame. The headlamp includes an upper light source, a lower light source, an upper reflector, and a lower reflector. The upper light source includes a plurality of luminous elements aligned laterally in a front view of the vehicle. The lower light source includes a single or a plurality of luminous elements disposed below the upper light source in the front view of the vehicle. The plurality of luminous elements are aligned laterally in the front view of the vehicle. The upper reflector includes a plurality of reflector elements each associated with one of the luminous elements of the upper light source. The upper reflector is configured to forwardly reflect light emitted from the luminous elements of the upper light source. The lower reflector includes a single reflector element associated with the single luminous element of the lower light source or a plurality of reflector elements each associated with one of the plurality of luminous elements of the lower light source. The lower reflector is configured to forwardly reflect light emitted from the single or plurality of luminous elements of the lower light source. Adjacent ones of the reflector elements of the upper reflector are disposed laterally adjacent to each other, wherein a distance between the reflector elements of the upper reflector being laterally adjacent to each other is zero in a right-left direction in a front view of the leaning vehicle. When the leaning vehicle is in an upright position and at rest on a horizontal plane, with the leaning vehicle not being steered, a length between right and left ends of the lower light source is shorter than a length between right and left ends of the upper light source in the front view of the vehicle, and a horizontal distance between the left end of the lower light source and the left end of the upper light source is equal to a horizontal distance between the right end of the lower light source and the right end of the upper light source in the front view of the vehicle.

As used herein, the expression "headlamp disposed forward of the link mechanism in the front-rear direction of the body frame" includes the headlamp overlapping with the link mechanism in a plan view of the vehicle when the link mechanism is inclined relative to a vertical line such that the link mechanism is located further forward as it extends downward. This means that the rear end of the headlamp does not necessarily have to be located forward of the front end of the link mechanism, and the headlamp is located in front of the link mechanism at each position in the up-down direction of the body frame. In other words, when the leaning vehicle is in the upright position and at rest on the horizontal plane, with the leaning vehicle not being steered, the headlamp is located in front of the link mechanism in each cross section parallel to the horizontal plane.

Suppose that a headlamp is provided with only one luminous element. In such a case, the reflector of the headlamp needs to have a spherical shape, with the luminous element located centrally, so that the distances between the luminous element and portions of the reflector are as equal as possible. The headlamp of the leaning vehicle according to this embodiment, however, includes a plurality of luminous elements, and a plurality of reflector elements each associated with one of the luminous elements. This increases the flexibility of shapes and locations of the light source and reflectors of the headlamp. To make use of the increased flexibility of shapes and locations of the light source and reflectors of the leaning vehicle, the light source of the headlamp is divided into the upper light source and the lower light source. At least the upper light source includes a plurality of luminous elements aligned laterally. In the front view of the vehicle, the length between the right and left ends of the lower light source is shorter than the length between the right and left ends of the upper light source. The horizontal distance between the left end of the lower light source and the left end of the upper light source is equal to the horizontal distance between the right end of the lower light source and the right end of the upper light source. Adjacent ones of the reflector elements of the upper reflector are disposed laterally adjacent to each other. This arrangement enables the headlamp to be disposed at a relatively low position, while preventing the headlamp from interfering with the right and left front wheels, the right and left front wheel supports, the right and left side members, and/or the link mechanism. Consequently, the leaning vehicle according to this embodiment enables not only a reduction in tread width but also disposition of the headlamp at a low position, in addition to having a sufficient area for the reflectors of the headlamp.

According to another preferred embodiment, when the leaning vehicle is in the upright position and at rest on the horizontal plane, with the leaning vehicle not being steered, the left end of the upper light source including the plurality of luminous elements aligned laterally in the front view of the vehicle may be disposed rightward of a right end of the left front wheel support in the front view of the vehicle, and the right end of the upper light source including the plurality of luminous elements aligned laterally in the front view of the vehicle may be disposed leftward of a left end of the right front wheel support in the front view of the vehicle.

This embodiment easily achieves the effects previously described.

According to still another preferred embodiment, when the leaning vehicle is in the upright position and at rest on the horizontal plane, with the leaning vehicle not being steered, the lower light source may be disposed forward of the upper light source in the front-rear direction of the body frame.

This embodiment enables the lower light source of the headlamp to be disposed at a further forward location. Thus, the lower light source of the headlamp is unlikely to interfere with the right and left front wheel supports, the right and left side members, and/or the link mechanism. Consequently, the leaning vehicle according to this embodiment facilitates disposition of the headlamp at a low position while having a sufficient area for the reflectors of the headlamp.

According to yet another preferred embodiment, when the leaning vehicle is in the upright position and at rest on the horizontal plane, with the leaning vehicle not being steered, a front end of the lower reflector may be located forward of a front end of the upper reflector in the front-rear direction of the body frame.

This embodiment easily achieves the effects previously described.

According to still yet another preferred embodiment, when the leaning vehicle is in the upright position and at rest on the horizontal plane, with the leaning vehicle not being steered, the lower light source may be disposed forward of a wheel axis of the left front wheel and a wheel axis of the right front wheel in the front-rear direction of the body frame in a side view of the vehicle.

This embodiment easily achieves the effects previously described.

According to another preferred embodiment, the number of laterally aligned luminous elements of the upper light source may be N, where N is a natural number equal to or greater than two, and the number of luminous elements of the lower light source may be N - 1.

This embodiment facilitates the disposition of the luminous elements and reflectors of the headlamp.

According to still another preferred embodiment, the single luminous element or each of the plurality of luminous elements of the lower light source may be disposed between two adjacent ones of the luminous elements of the upper light source in a right-left direction of the body frame.

This embodiment facilitates the disposition of the luminous elements and reflectors of the headlamp.

According to yet another preferred embodiment, the leaning vehicle may further include a left position lamp and a right position lamp. The left position lamp may be disposed leftward of the left end of the upper light source in the right-left direction of the body frame. The upper light source may include the plurality of luminous elements aligned laterally in the front view of the vehicle. The right position lamp may be disposed rightward of the right end of the upper light source in the right-left direction of the body frame. The upper light source may include the plurality of luminous elements aligned laterally in the front view of the vehicle.

This embodiment enables, for example, pedestrian(s) around the leaning vehicle to easily recognize the size of the leaning vehicle.

According to still yet another preferred embodiment, the link mechanism may include an upper cross member and a lower cross member. The upper cross member may be coupled to the body frame, the left side member, and the right side member such that the upper cross member is rotatable relative to the body frame, the left side member, and the right side member around upper link axes extending in the front-rear direction of the body frame. The lower cross member may be disposed below the upper cross member in the up-down direction of the body frame. The lower cross member may be coupled to the body frame, the left side member, and the right side member such that the lower cross member is rotatable relative to the body frame, the left side member, and the right side member around lower link axes extending in the front-rear direction of the body frame. A lower end of the upper reflector may be located below an upper end of the lower cross member.

The headlamp according to this embodiment is disposed at a low position. This embodiment allows the leaning vehicle to have a sufficient area for the reflectors of the headlamp while enabling a reduction in tread width and disposition of the headlamp at a low position.

### EFFECTS OF INVENTION

Various embodiments provide a leaning vehicle that includes two front wheels and a leanable body frame and enables not only a reduction in tread width but also disposition of a headlamp at a low position, in addition to having a sufficient area for the reflectors of the headlamp.

### BRIEF DESCRIPTION OF DRAWINGS

FIG. 1 is a side view of a leaning vehicle according to an embodiment.
FIG. 2 is a front view of a portion of the leaning vehicle.
FIG. 3 is a front view of a portion of the leaning vehicle when the vehicle is making a left turn.
FIG. 4 is a front view of a steering mechanism of the leaning vehicle.
FIG. 5 is a plan view of a portion of the leaning vehicle.
FIG. 6 is a partial side view of a portion of the leaning vehicle.
FIG. 7 is a front view of a headlamp.
FIG. 8 is a cross-sectional view of the headlamp taken along the line VIII-VIII in FIG. 7.
FIG. 9 is a diagram schematically illustrating regions illuminated with light emitted from the headlamp.

### DESCRIPTION OF EMBODIMENTS

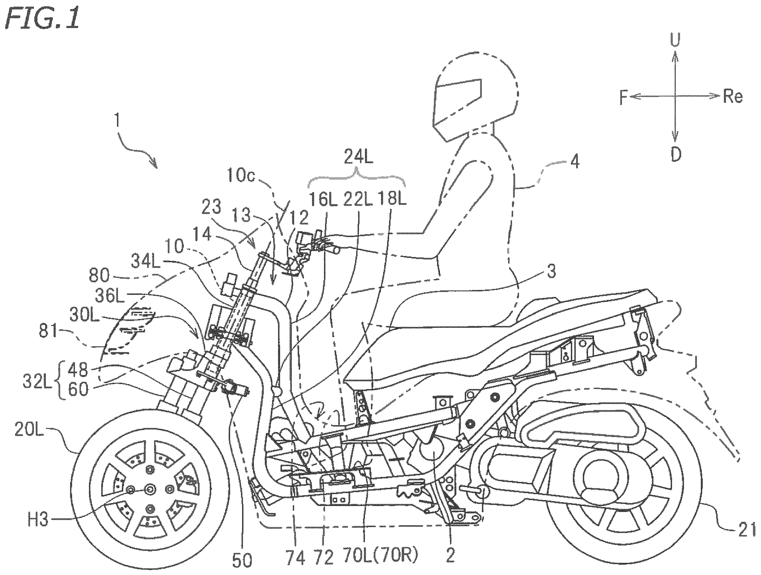

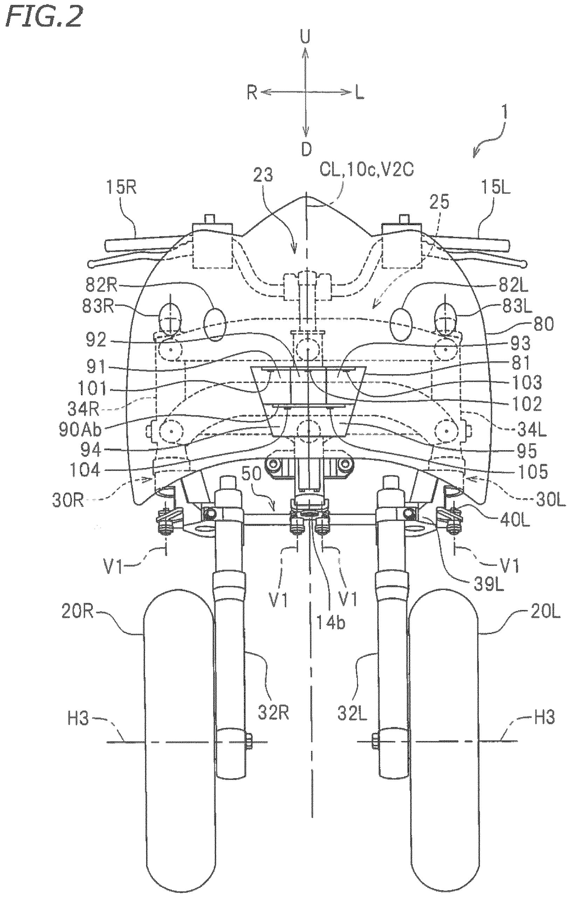

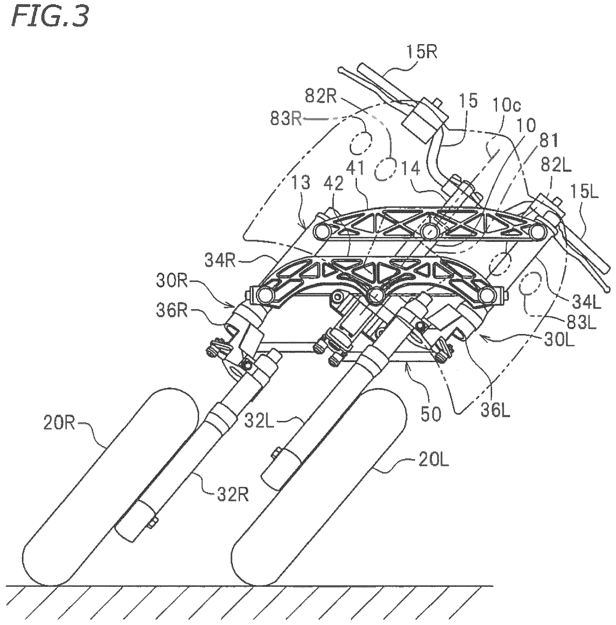

An embodiment will be described below with reference to the drawings. As illustrated in FIGS. 1 and 2, a leaning vehicle 1 according to this embodiment is a straddled three-wheeled vehicle including two front wheels, i.e., a right front wheel 20R and a left front wheel 20L, and a single rear wheel 21. The leaning vehicle 1 leans rightward in making a right turn and leans leftward in making a left turn. More specifically, as illustrated in FIG. 3, the leaning vehicle 1 includes a body frame 13 leanable relative to the ground. The relative positions of the right and left front wheels 20R and 20L in the up-down direction of the body frame 13 change in accordance with the lean of the body frame 13.

Unless otherwise specified, the terms "front", "rear", "right", "left", "up", and "down" as used herein respectively refer to front, rear, right, left, up, and down with respect to a rider 4 sitting on a seat 3 when the leaning vehicle 1 is at rest on a horizontal plane, with the leaning vehicle 1 not being steered. The reference signs F, Re, R, L, U, and D in the drawings respectively represent front, rear, right, left, up, and down. The terms "front-rear direction of the body frame", "up-down direction of the body frame", and "right-left direction of the body frame" respectively refer to the front-rear direction, the up-down direction, and the right-left direction with respect to the body frame. When the leaning vehicle 1 is not being steered and the body frame 13 is in an upright position, the front-rear direction, the up-down direction, and the right-left direction of the body frame 13 respectively correspond to the front-rear direction, the up-down direction, and the right-left direction of the leaning vehicle 1. When the leaning vehicle 1 is being steered or the body frame 13 is leaning, the front-rear direction, the up-down direction, and the right-left direction of the body frame 13 may respectively differ from the front-rear direction, the up-down direction, and the right-left direction of the leaning vehicle 1. The term "axis extending in the front-rear direction" is not limited to an axis parallel to the front-rear direction but includes an axis inclined by -45 to +45 degrees with respect to the front-rear direction. Similarly, the term "axis extending in the up-down direction" includes an axis inclined by -45 to +45 degrees with respect to the up-down direction, and the term "axis extending in the right-left direction" includes an axis inclined by - 45 to +45 degrees with respect to the right-left direction. Unless otherwise specified, the positions, shapes, and other characteristics of components and elements of the leaning vehicle 1 will be described below on the assumption that the leaning vehicle 1 carries no load (which means that no one is riding on the leaning vehicle 1 and no fuel is stored in a fuel tank) and the leaning vehicle 1 is in an upright position and at rest on a horizontal plane, with the leaning vehicle 1 not being steered.

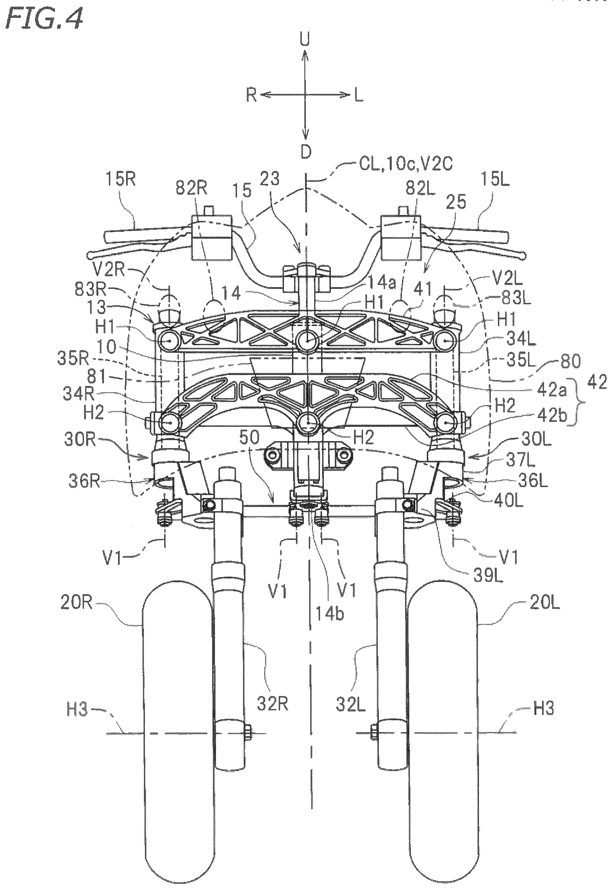

As illustrated in FIGS. 1 and 4, the leaning vehicle 1 includes: the body frame 13; the right front wheel 20R; the left front wheel 20L; the rear wheel 21; a steering mechanism 23 to steer the right and left front wheels 20R and 20L; a link mechanism 25 to cause the right and left front wheels 20R and 20L to lean in accordance with the lean of the body frame 13; the seat 3 on which the rider 4 sits; and a power unit 2 to generate a drive force that drives the rear wheel 21. As illustrated in FIG. 2, the leaning vehicle 1 further includes a front cover 80, a headlamp 81, a right position lamp 82R, a left position lamp 82L, a right flasher 83R, and a left flasher 83L. The following description first discusses the structure of the leaning vehicle 1, and then discusses the headlamp 81, the right and left position lamps 82R and 82L, and the right and left flashers 83R and 83L.

As illustrated in FIG. 4, the body frame 13 includes a head pipe 10. A left side member 34L is disposed to the left of the head pipe 10. A right side member 34R is disposed to the right of the head pipe 10. As illustrated in FIG. 1, the body frame 13 further includes a main frame 12 connected to the head pipe 10. The main frame 12 extends rearward from the head pipe 10 in a side view of the leaning vehicle 1.

The head pipe 10 extends obliquely rearward and upward in the side view of the leaning vehicle 1. As illustrated in FIG. 4, the head pipe 10 extends in the up-down direction in a front view of the leaning vehicle 1. The right and left side members 34R and 34L are pipe-shaped and disposed parallel to the head pipe 10.

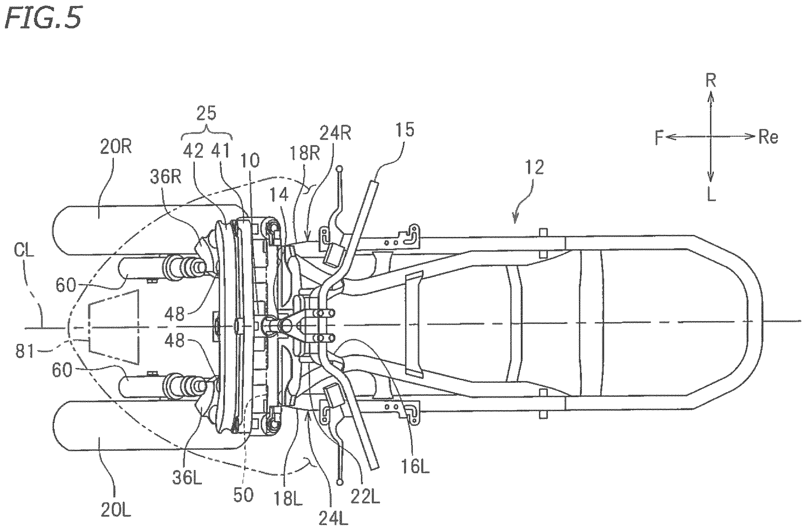

The main frame 12 is not limited to any particular configuration. As illustrated in FIG. 5, the main frame 12 includes a right frame 24R and a left frame 24L in this embodiment. The right frame 24R is disposed to the right of a vehicle center line CL. The left frame 24L is disposed to the left of the vehicle center line CL. As used herein, the term "vehicle center line CL" refers to a line intersecting a center axis 10c (see FIG. 4) of the head pipe 10 and extending in the front-rear direction of the body frame 13. The right and left frames 24R and 24L are each connected to the head pipe 10.

As illustrated in FIG. 1, the left frame 24L includes an upper left frame 16L, a lower left frame 18L, and a left connecting frame 22L connecting the upper left frame 16L and the lower left frame 18L to each other. The upper and lower left frames 16L and 18L are each connected to the head pipe 10. Note that the upper left frame 16L is connected to a portion of the head pipe 10 located above a portion of the head pipe 10 connected with the lower left frame 18L.

The right frame 24R is symmetrical in shape and location with the left frame 24L with respect to the vehicle center line CL. Because the right frame 24R is similar to the left frame 24L except that the right frame 24R is a mirror image of the left frame 24L, detailed description of the right frame 24R will be omitted.

As illustrated in FIG. 1, the leaning vehicle 1 further includes a right footrest 70R and a left footrest 70L. The rider 4 sitting on the seat 3 places his or her right foot on the right footrest 70R and places his or her left foot on the left footrest 70L. Although FIG. 1, which is the left side view of the leaning vehicle 1, does not illustrate the right footrest 70R, the right footrest 70R is symmetrical in location with the left footrest 70L with respect to the vehicle center line CL. The right footrest 70R is disposed to the right of the vehicle center line CL. The left footrest 70L is disposed to the left of the vehicle center line CL. The right and left footrests 70R and 70L are each disposed rearward of the head pipe 10, forward of at least a portion of the seat 3, and below the head pipe 10 and the seat 3.

The leaning vehicle 1 further includes a body cover 74 covering at least a portion of the body frame 13. The body cover 74 includes a center tunnel 72 located to the right of the left footrest 70L, to the left of the right footrest 70R, and above the right and left footrests 70R and 70L. Although not illustrated, a cross section of the center tunnel 72 perpendicular to the front-rear direction of the body frame 13 has a convex shape projecting upward in the up-down direction of the body frame 13.

As illustrated in FIG. 4, the link mechanism 25 couples the head pipe 10, the right side member 34R, and the left side member 34L to each other. The link mechanism 25 is configured to cause the right and left side members 34R and 34L to lean in accordance with the lean of the head pipe 10. The link mechanism 25 includes a first cross member 41, and a second cross member 42 disposed below the first cross member 41 in the up-down direction of the body frame 13. The first cross member 41 may also be referred to as an "upper cross member 41", and the second cross member 42 may also be referred to as a "lower cross member 42".

The first cross member 41 extends in the right-left direction. The first cross member 41 is disposed in front of the head pipe 10. Alternatively, the first cross member 41 may be disposed behind the head pipe 10. The first cross member 41 is coupled to the head pipe 10, the right side member 34R, and the left side member 34L such that the first cross member 41 is rotatable relative to the head pipe 10, the right side member 34R, and the left side member 34L around upper link axes H1 extending in the front-rear direction of the body frame 13.

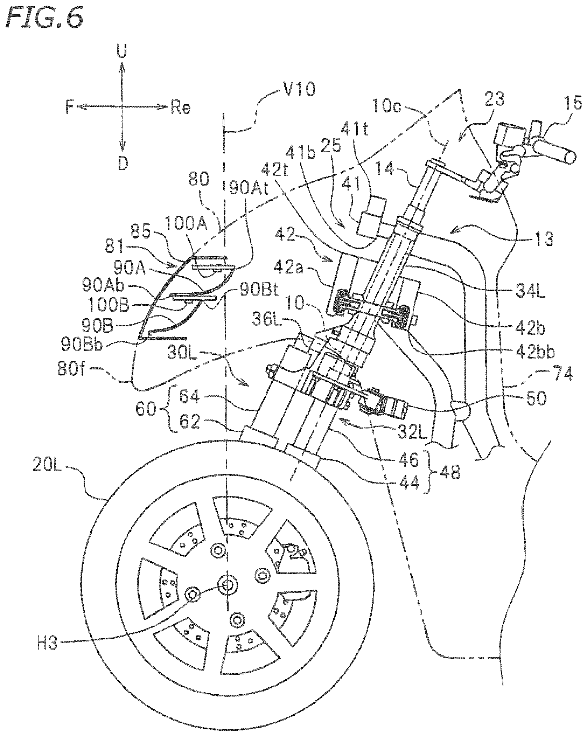

The second cross member 42 extends in the right-left direction. In this embodiment, the second cross member 42 includes: a front cross member 42a disposed in front of the head pipe 10; and a rear cross member 42b (see FIG. 6) disposed behind the head pipe 10. Alternatively, the second cross member 42 may consist of the front cross member 42a or the rear cross member 42b. The second cross member 42 is coupled to the head pipe 10, the right side member 34R, and the left side member 34L such that the second cross member 42 is rotatable relative to the head pipe 10, the right side member 34R, and the left side member 34L around lower link axes H2 extending in the front-rear direction of the body frame 13. Each lower link axis H2 is located below each upper link axis H1 in the up-down direction of the body frame 13.

As illustrated in FIG. 4, the steering mechanism 23 includes a steering shaft 14, a handlebar 15, a right front wheel support 30R, a left front wheel support 30L, and a tie rod 50.

The steering shaft 14 is inserted into the head pipe 10. The steering shaft 14 is rotatably supported by the head pipe 10. The steering shaft 14 is rotatable relative to the head pipe 10 around a center steering axis V2C extending in the up-down direction of the body frame 13. In the front view of the leaning vehicle 1, the center steering axis V2C corresponds to the vehicle center line CL. The steering shaft 14 includes: an upper portion 14a located above the head pipe 10; and a lower portion 14b located below the head pipe 10.

The handlebar 15 is secured to the upper portion 14a of the steering shaft 14. The handlebar 15 extends in the right-left direction. The handlebar 15 includes: a right grip 15R to be grasped by the right hand of the rider 4; and a left grip 15L to be grasped by the left hand of the rider 4.

The left front wheel support 30L is rotatable relative to the left side member 34L around a left steering axis V2L extending in the up-down direction of the body frame 13. The left front wheel support 30L supports the left front wheel 20L such that the left front wheel 20L is rotatable around a wheel axis H3 extending in the right-left direction of the body frame 13. The left front wheel support 30L includes: a left fork 32L supporting the left front wheel 20L such that the left front wheel 20L is rotatable around the wheel axis H3; a left shaft 35L supported by the left side member 34L so as to be rotatable around the left steering axis V2L; and a left bracket 36L connecting the left fork 32L and the left shaft 35L to each other.

The left shaft 35L is inserted into the left side member 34L so as to be rotatable around the left steering axis V2L. The left fork 32L is disposed inward of the left shaft 35L in the vehicle width direction. As used herein, the expression "being inward in the vehicle width direction" means being closer to the vehicle center line CL, and the expression "being outward in the vehicle width direction" means being farther away from the vehicle center line CL. As illustrated in FIG. 6, the left fork 32L includes a telescopic buffer 48, and a rotation preventer 60 disposed parallel to the telescopic buffer 48. The telescopic buffer 48 includes an outer tube 44, and an inner tube 46 slidably inserted into the outer tube 44. The rotation preventer 60 prevents the outer tube 44 and the inner tube 46 of the telescopic buffer 48 from rotating relative to each other. The rotation preventer 60 is disposed in front of the telescopic buffer 48. Alternatively, the rotation preventer 60 may be disposed behind the telescopic buffer 48. The rotation preventer 60 is not limited to any particular configuration. In this embodiment, the rotation preventer 60 includes an outer tube 62, and an inner tube 64 slidably inserted into the outer tube 62.

The inner tube 46 of the telescopic buffer 48 and the inner tube 64 of the rotation preventer 60 are secured to the left bracket 36L. As illustrated in FIG. 4, the left bracket 36L includes: a portion 37L to which the left shaft 35L is secured; a portion 39L to which the left fork 32L (or more specifically, the inner tubes 46 and 64) is/are secured; and a left coupler 40L to which the tie rod 50 is coupled.

As illustrated in FIG. 4, the right front wheel support 30R includes a right shaft 35R, a right fork 32R, and a right bracket 36R. The right shaft 35R, the right fork 32R, and the right bracket 36R are respectively symmetrical in shape and location with the left shaft 35L, the left fork 32L, and the left bracket 36L with respect to the vehicle center line CL. The right shaft 35R is similar in configuration to the left shaft 35L. The right fork 32R is similar in configuration to left fork 32L. The right bracket 36R is similar in configuration to the left bracket 36L. Thus, detailed description of the right shaft 35R, the right fork 32R, and the right bracket 36R will be omitted. The right fork 32R includes a telescopic buffer 48 and a rotation preventer 60 similar to those of the left fork 32L.

The tie rod 50 is configured to synchronize rotation of the steering shaft 14 around the center steering axis V2C, rotation of the left front wheel support 30L around the left steering axis V2L, and rotation of the right front wheel support 30R around a right steering axis V2R. The tie rod 50 is coupled to the steering shaft 14, the left front wheel support 30L, and the right front wheel support 30R such that the tie rod 50 is rotatable relative to the steering shaft 14, the left front wheel support 30L, and the right front wheel support 30R around axes V1 extending in the up-down direction of the body frame 13.

As illustrated in FIG. 6, the front cover 80 is secured to the body frame 13. At least a portion of the front cover 80 is disposed forward of the steering shaft 14 and the link mechanism 25. In the side view of the leaning vehicle 1, the upper edge of the front cover 80 is inclined downward with respect to a straight line V10 as it extends forward. The front cover 80 includes a front end 80f located forward of the wheel axis H3 of the right and left front wheels 20R and 20L. In this embodiment, the front cover 80 is a component separate from the body cover 74 and connected to the body cover 74. Alternatively, a portion or entirety of the front cover 80 may be integral with the body cover 74.

As illustrated in FIG. 2, the headlamp 81, the right and left position lamps 82R and 82L, and the right and left flashers 83R and 83L are attached to the front cover 80. Alternatively, the right and left position lamps 82R and 82L, and the right and left flashers 83R and 83L may be attached to a component other than the front cover 80.

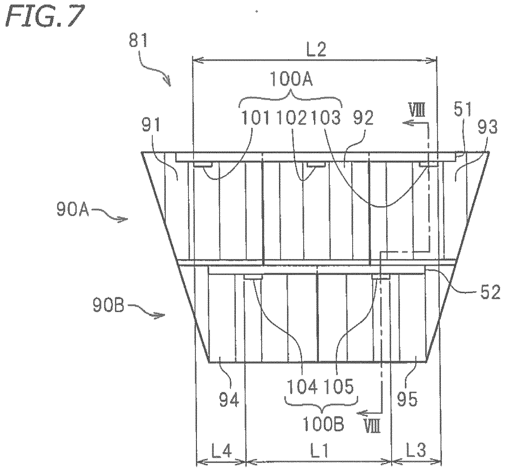

The headlamp 81 mainly functions as an illuminating lamp to illuminate a road surface in front of the leaning vehicle 1 so that the road surface is easily visible to the rider 4 in a dark environment, e.g., at nighttime. The headlamp 81 is disposed forward of the link mechanism 25 in the front-rear direction of the body frame 13. At least a portion of the headlamp 81 is located on the vehicle center line CL. The left end of the headlamp 81 is located leftward of the vehicle center line CL, and the right end of the headlamp 81 is located rightward of the vehicle center line CL. FIG. 7 is an enlarged front view of the headlamp 81. The headlamp 81 includes a plurality of light-emitting diodes (LEDs), and a plurality of reflector elements each associated with one of the LEDs. In this embodiment, as illustrated in FIG. 7, the headlamp 81 includes five LEDs, i.e., LEDs 101, 102, 103, 104, and 105, and five reflector elements, i.e., reflector elements 91, 92, 93, 94, and 95.

The LEDs 101, 102, and 103 are aligned laterally. The LEDs 104 and 105 are aligned laterally. The LEDs 101, 102, and 103 are mounted on a substrate 51. The LEDs 104 and 105 are mounted on a substrate 52. The substrate 52 is disposed below the substrate 51. The LEDs 104 and 105 are disposed below the LEDs 101, 102, and 103. The LEDs 101, 102, and 103 are components of an upper light source 100A. In other words, the upper light source 100A includes three laterally aligned LEDs, i.e., the LEDs 101, 102, and 103. The LEDs 104 and 105 are components of a lower light source 100B. In other words, the lower light source 100B includes two laterally aligned LEDs, i.e., the LEDs 104 and 105. The LED 104 is disposed between the LED 101 and the LED 102 in the right-left direction. The LED 105 is disposed between the LED 102 and the LED 103 in the right-left direction. In this embodiment, the LEDs 101, 102, and 103 are disposed at the same height. Alternatively, the LEDs 101, 102, and 103 may be disposed at different heights in the up-down direction. In this embodiment, the LEDs 104 and 105 are disposed at the same height. Alternatively, the LEDs 104 and 105 may be disposed at different heights in the up-down direction.

In the front view of the leaning vehicle 1, a length L1 between the right and left ends of the lower light source 100B is shorter than a length L2 between the right and left ends of the upper light source 100A. A horizontal distance L3 between the left end of the lower light source 100B and the left end of the upper light source 100A is equal to a horizontal distance L4 between the right end of the lower light source 100B and the right end of the upper light source 100A. In other words, the length L1 between the left end of the LED 105 and the right end of the LED 104 is shorter than the length L2 between the left end of the LED 103 and the right end of the LED 101. The horizontal distance L3 between the left end of the LED 105 and the left end of the LED 103 is equal to the horizontal distance L4 between the right end of the LED 104 and the right end of the LED 101. As illustrated in FIG. 2, the left end of the upper light source 100A (including the plurality of LEDs aligned laterally in the front view of the leaning vehicle 1) is disposed rightward of the right end of the left front wheel support 30L in the front view of the leaning vehicle 1. This means that the left end of the LED 103 is disposed rightward of the right end of the left fork 32L. The right end of the upper light source 100A (including the plurality of LEDs aligned laterally in the front view of the leaning vehicle 1) is disposed leftward of the left end of the right front wheel support 30R in the front view of the leaning vehicle 1. This means that the right end of the LED 101 is disposed leftward of the left end of the right fork 32R.

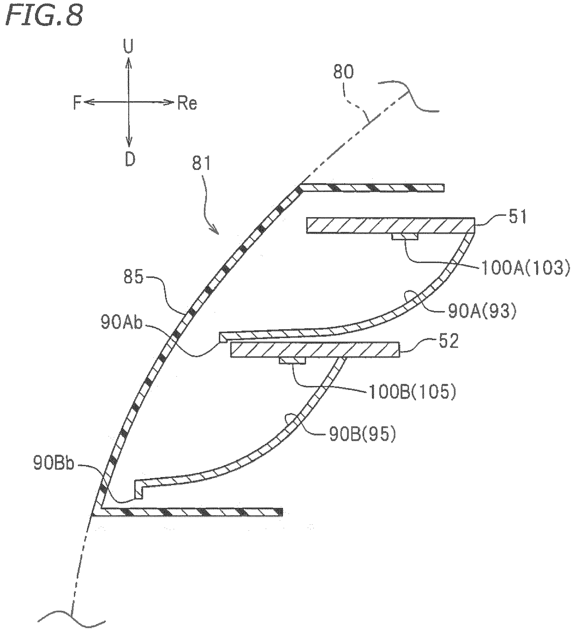

As illustrated in FIG. 8, the lower light source 100B is disposed forward of the upper light source 100A in the front-rear direction of the body frame 13. The LEDs 104 and 105 are disposed forward of the LEDs 101, 102, and 103 in the front-rear direction of the body frame 13. In this embodiment, the LEDs 101, 102, and 103 are located at the same position in the front-rear direction of the body frame 13 in the side view of the leaning vehicle 1. Alternatively, the LEDs 101, 102, and 103 may be located at different positions in the front-rear direction of the body frame 13 in the side view of the leaning vehicle 1. The LEDs 104 and 105 are located at the same position in the front-rear direction of the body frame 13 in the side view of the leaning vehicle 1. Alternatively, the LEDs 104 and 105 may be located at different positions in the front-rear direction of the body frame 13 in the side view of the leaning vehicle 1.

The upper light source 100A and the lower light source 100B are disposed so as to emit light downward. In other words, the LEDs 101, 102, 103, 104, and 105 are disposed so as to emit light downward. As illustrated in FIG. 7, at least a portion of the reflector element 91 is disposed below the LED 101. The reflector element 91 is configured to forwardly reflect light emitted from the LED 101. Similarly, at least a portion of the reflector element 92 is disposed below the LED 102, at least a portion of the reflector element 93 is disposed below the LED 103, at least a portion of the reflector element 94 is disposed below the LED 104, and at least a portion of the reflector element 95 is disposed below the LED 105. The reflector elements 92, 93, 94, and 95 are configured to respectively forwardly reflect light emitted from the LEDs 102, 103, 104, and 105. As illustrated in FIG. 8, the reflector elements 91, 92, 93, 94, and 95 are inclined forward with respect to the straight line V10 (see FIG. 6) as they extend downward.

As illustrated in FIG. 7, the reflector elements 91, 92, and 93 are disposed laterally adjacent to each other. As used herein, the expression "being disposed laterally adjacent to each other" means that the distance between two laterally adjacent ones of the reflector elements is zero in the right-left direction. The distance between the reflector elements 91 and 92 and the distance between the reflector elements 92 and 93 are both zero. This means that the reflector elements 91 and 92 are continuous with each other, and the reflector elements 92 and 93 are continuous with each other. The reflector elements 94 and 95 are disposed laterally adjacent to each other. The distance between the reflector elements 94 and 95 is zero. This means that the reflector elements 94 and 95 are continuous with each other.

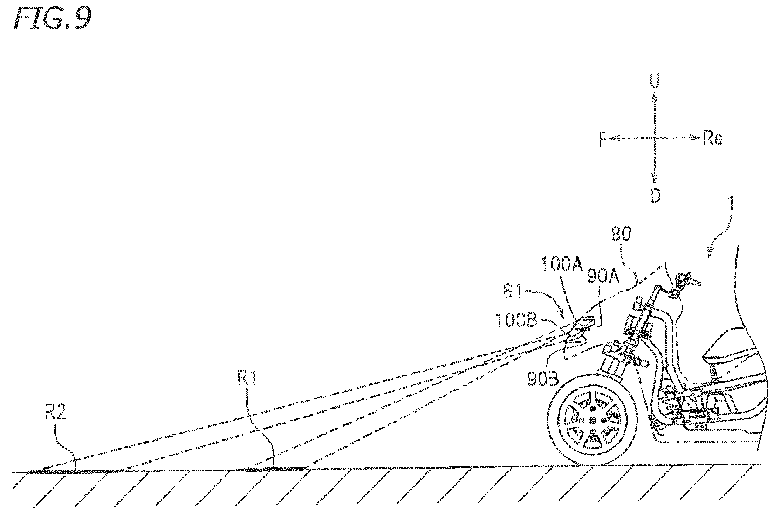

The reflector elements 94 and 95 are disposed below the reflector elements 91, 92, and 93. The reflector elements 91, 92, and 93 are components of an upper reflector 90A. The reflector elements 94 and 95 are components of a lower reflector 90B. As schematically illustrated in FIG. 9, light reflected by the upper reflector 90A and light reflected by the lower reflector 90B are emitted to different regions. Specifically, the light reflected by the upper reflector 90A is emitted to a region R1, and the light reflected by the lower reflector 90B is emitted to a region R2. In this embodiment, the region R2 illuminated with the light reflected by the lower reflector 90B is located forward of the region R1 illuminated with the light reflected by the upper reflector 90A. The upper light source 100A lights up solely. The lower light source 100B lights up together with the upper light source 100A. The upper light source 100A and the upper reflector 90A produce what is called low beams. The lower light source 100B and the lower reflector 90B produce what is called high beams. Alternatively, the upper light source 100A and the upper reflector 90A may produce high beams, and the lower light source 100B and the lower reflector 90B may produce low beams. The region R1 illuminated with the light reflected by the upper reflector 90A may be disposed forward of the region R2 illuminated with the light reflected by the lower reflector 90B. Note that FIG. 9 is a schematic diagram for the purpose of clarity. The actual positions of the regions R1 and R2 differ from the positions of the regions R1 and R2 illustrated in FIG. 9.

As illustrated in FIG. 6, the upper reflector 90A includes an upper end 90At located below an upper end 41t of the upper cross member 41. In this embodiment, the upper end 90At of the upper reflector 90A is located below a lower end 41b of the upper cross member 41. Alternatively, the upper end 90At of the upper reflector 90A may be located at the same height as the lower end 41b of the upper cross member 41 in the up-down direction or may be located above the lower end 41b of the upper cross member 41. The upper reflector 90A includes a lower end 90Ab located below an upper end 42t of the lower cross member 42. The lower end 90Ab of the upper reflector 90A is located above a lower end 42bb of the lower cross member 42. The lower reflector 90B includes an upper end 90Bt located below the upper end 42t of the lower cross member 42. In this embodiment, the lower reflector 90B includes a lower end 90Bb located below the lower end 42bb of the lower cross member 42. Alternatively, the lower end 90Bb of the lower reflector 90B may be located at the same height as the lower end 42bb of the lower cross member 42 in the up-down direction or may be located above the lower end 42bb of the lower cross member 42.

In this embodiment, the upper end 90At of the upper reflector 90A also serves as the rear end of the upper reflector 90A, and the lower end 90Ab of the upper reflector 90A also serves as the front end of the upper reflector 90A. The upper end 90Bt of the lower reflector 90B also serves as the rear end of the lower reflector 90B, and the lower end 90Bb of the lower reflector 90B also serves as the front end of the lower reflector 90B. The rear end 90At of the upper reflector 90A is located rearward of the wheel axis H3. The straight line V10 in FIG. 6 is a vertical line passing through the wheel axis H3. The front end 90Ab of the upper reflector 90A is located forward of the wheel axis H3. In this embodiment, the rear end 90Bt of the lower reflector 90B is located forward of the wheel axis H3. Alternatively, the rear end 90Bb of the lower reflector 90B may be located rearward of the wheel axis H3. The front end 90Bb of the lower reflector 90B is located forward of the wheel axis H3. The front end 90Bb of the lower reflector 90B is located forward of the front end 90Ab of the upper reflector 90A in the front-rear direction of the body frame 13.

The upper light source 100A is located below the upper end 41t of the upper cross member 41. In this embodiment, the upper light source 100A is located below the lower end 41b of the upper cross member 41. Alternatively, the upper light source 100A may be located above the lower end 41b of the upper cross member 41. In this embodiment, the upper light source 100A is located below the upper end 42t of the lower cross member 42. Alternatively, the upper light source 100A may be located above the upper end 42t of the lower cross member 42. The lower light source 100B is located below the upper end 42t of the lower cross member 42. The lower light source 100B is located above the lower end 42bb of the lower cross member 42.

In this embodiment, the upper light source 100A is disposed forward of the wheel axis H3 in the front-rear direction of the body frame 13 in the side view of the leaning vehicle 1. Alternatively, the upper light source 100A may overlap with the straight line V10 perpendicular to and passing through the wheel axis H3 or may be located rearward of the wheel axis H3 in the front-rear direction of the body frame 13 in the side view of the leaning vehicle 1. In this embodiment, the lower light source 100B is disposed forward of the wheel axis H3 in the front-rear direction of the body frame 13 in the side view of the leaning vehicle 1. Alternatively, the lower light source 100B may overlap with the straight line V10 perpendicular to and passing through the wheel axis H3 or may be located rearward of the wheel axis H3 in the front-rear direction of the body frame 13 in the side view of the leaning vehicle 1.

The above-described locations of the upper light source 100A, the lower light source 100B, the upper reflector 90A, and the lower reflector 90B are merely illustrative. The upper light source 100A, the lower light source 100B, the upper reflector 90A, and the lower reflector 90B may be disposed at any other suitable locations.

As illustrated in FIG. 8, a transparent outer lens 85 is disposed in front of the upper light source 100A, the lower light source 100B, the upper reflector 90A, and the lower reflector 90B. The outer lens 85 has a shape conforming to the surface of the front cover 80. The outer lens 85 is inclined downward with respect to the straight line V10 (see FIG. 6) as it extends forward in the side view of the leaning vehicle 1.

As illustrated in FIG. 2, the left position lamp 82L is disposed leftward of the vehicle center line CL, and the right position lamp 82R is disposed rightward of the vehicle center line CL. The left position lamp 82L is disposed leftward of the left end of the upper light source 100A (including the plurality of LEDs aligned laterally in the front view of the leaning vehicle 1) in the right-left direction of the body frame 13. In other words, the left position lamp 82L is disposed leftward of the left end of the LED 103 in the right-left direction of the body frame 13. The right position lamp 82R is disposed rightward of the right end of the upper light source 100A (including the plurality of LEDs aligned laterally in the front view of the leaning vehicle 1) in the right-left direction of the body frame 13. In other words, the right position lamp 82R is disposed rightward of the right end of the LED 101 in the right-left direction of the body frame 13. The right and left position lamps 82R and 82L function as illuminating lamps to enable, for example, the driver(s) or rider(s) of other vehicle(s) or pedestrian(s) around the leaning vehicle 1 to recognize the size of the leaning vehicle 1 (e.g., the width of the leaning vehicle 1). In this embodiment, the right and left position lamps 82R and 82L are disposed above the headlamp 81. Alternatively, at least a portion of the left position lamp 82L and at least a portion of the right position lamp 82R may be disposed at the same height as the headlamp 81 in the up-down direction. In this embodiment, the left position lamp 82L is disposed leftward of the headlamp 81, and the right position lamp 82R is disposed rightward of the headlamp 81. Alternatively, at least a portion of the left position lamp 82L and at least a portion of the right position lamp 82R may be disposed at the same position as the headlamp 81 in the right-left direction. At least a portion of the left position lamp 82L is disposed leftward of the right end of the left front wheel support 30L. Specifically, at least a portion of the left position lamp 82L is disposed leftward of the right end of the left fork 32L. Alternatively, an entirety of the left position lamp 82L may be disposed leftward of the right end of the left front wheel support 30L. At least a portion of the right position lamp 82R is disposed rightward of the left end of the right front wheel support 30R. Specifically, at least a portion of the right position lamp 82R is disposed rightward of the left end of the right fork 32R. Alternatively, an entirety of the right position lamp 82R may be disposed rightward of the left end of the right front wheel support 30R.

The right flasher 83R functions as an illuminating lamp to blink when the leaning vehicle 1 makes a right turn, thus signaling, for example, the driver(s) or rider(s) of other vehicle(s) or pedestrian(s) around the leaning vehicle 1 that the leaning vehicle 1 makes a right turn. The left flasher 83L functions as an illuminating lamp to blink when the leaning vehicle 1 makes a left turn, thus signaling, for example, the driver(s) or rider(s) of other vehicle(s) or pedestrian(s) around the leaning vehicle 1 that the leaning vehicle 1 makes a left turn. As illustrated in FIG. 2, the left flasher 83L is disposed leftward of the vehicle center line CL, and the right flasher 83R is disposed rightward of the vehicle center line CL. In this embodiment, the right and left flashers 83R and 83L are disposed above the headlamp 81. Alternatively, at least a portion of the left flasher 83L and at least a portion of the right flasher 83R may be disposed at the same height as the headlamp 81 in the up-down direction.

Although not illustrated, the right and left position lamps 82R and 82L and the right and left flashers 83R and 83L each include a luminous element and a reflector. Each luminous element is not limited to any particular type. Each luminous element may be an electric light bulb or LED, for example.

The preceding paragraphs have described the configurations of the headlamp 81, the right and left position lamps 82R and 82L, and the right and left flashers 83R and 83L.

Suppose that a headlamp including a luminous element and a reflector is provided with only one luminous element. In such a case, the reflector of the headlamp needs to have a spherical shape, with the luminous element located centrally, so that the distances between the luminous element and portions of the reflector are as equal as possible. The headlamp 81 of the leaning vehicle 1 according to this embodiment, however, includes the plurality of luminous elements (LEDs) 101 to 105, and the plurality of reflector elements 91 to 95 respectively associated with the luminous elements 101 to 105. This increases the flexibility of shapes and locations of the light source and reflectors of the headlamp 81. To make use of the increased flexibility, the light source of the headlamp 81 of the leaning vehicle 1 according to this embodiment is divided into the upper light source 100A and the lower light source 100B. At least the upper light source 100A includes a plurality of laterally aligned luminous elements, i.e., the LEDs 101 to 103. In the front view of the leaning vehicle 1, the length L1 between the right and left ends of the lower light source 100B is shorter than the length L2 between the right and left ends of the upper light source 100A. The horizontal distance L3 between the left end of the lower light source 100B and the left end of the upper light source 100A is equal to the horizontal distance L4 between the right end of the lower light source 100B and the right end of the upper light source 100A. The reflector elements 91 to 93 of the upper reflector 90A are disposed laterally adjacent to each other.

The above-described arrangement of the leaning vehicle 1 according to this embodiment enables the headlamp 81 to be disposed at a relatively low position, while preventing the headlamp 81 from interfering with the right and left front wheels 20R and 20L, the right and left front wheel supports 30R and 30L, the right and left side members 34R and 34L, and/or the link mechanism 25 (see FIG. 3). Consequently, the leaning vehicle 1 according to this embodiment enables not only a reduction in tread width but also disposition of the headlamp 81 at a low position, while having a sufficient area for the upper and lower reflectors 90A and 90B of the headlamp 81.

To make use of the increased flexibility of shapes and locations of the light sources and reflectors of the headlamp 81 of the leaning vehicle 1 according to this embodiment, the lower light source 100B is disposed forward of the upper light source 100A in the front-rear direction of the body frame 13 as illustrated in FIG. 8. This enables the lower light source 100B of the headlamp 81 to be disposed at a further forward location. Thus, the lower light source 100B is unlikely to interfere with the right and left front wheel supports 30R and 30L, the right and left side members 34R and 34L, and/or the link mechanism 25. Consequently, the leaning vehicle 1 according to this embodiment enables not only a reduction in tread width but also disposition of the headlamp 81 at a low position, while having a sufficient area for the upper and lower reflectors 90A and 90B of the headlamp 81.

The leaning vehicle 1 according to this embodiment is configured so that the front end 90Bb of the lower reflector 90B is located forward of the front end 90Ab of the upper reflector 90A in the front-rear direction of the body frame 13. This enables the lower reflector 90B to be disposed at a further forward location. Thus, the lower reflector 90B is unlikely to interfere with the right and left front wheel supports 30R and 30L, the right and left side members 34R and 34L, and/or the link mechanism 25. Consequently, the leaning vehicle 1 according to this embodiment enables not only a reduction in tread width but also disposition of the headlamp 81 at a low position, while having a sufficient area for the upper and lower reflectors 90A and 90B of the headlamp 81.

The leaning vehicle 1 according to this embodiment is configured so that the number of LEDs of the lower light source 100B is less by one than the number of LEDs of the upper light source 100A. The number of reflector elements of the lower reflector 90B is less by one than the number of reflector elements of the upper reflector 90A. Thus, the luminous elements and reflector elements of the headlamp 81 are disposed at suitable locations. Consequently, this embodiment easily provides an arrangement that creates a sufficient area for the upper and lower reflectors 90A and 90B, while not only reducing the tread width but also disposing the headlamp 81 at a low position.

As illustrated in FIG. 9, the upper and lower reflectors 90A and 90B of the headlamp 81 of the leaning vehicle 1 according to this embodiment are configured so that the region R1 illuminated with light reflected by the upper reflector 90A is different from the region R2 illuminated with light reflected by the lower reflector 90B. Thus, this embodiment enables the use of the upper light source 100A as a low beam light source, the use of the upper reflector 90A as a low beam reflector, the use of the lower light source 100B as a high beam light source, and the use of the lower reflector 90B as a high beam reflector.

The leaning vehicle 1 according to this embodiment is configured so that the lower end 90Ab of the upper reflector 90A is located below the upper end 42t of the lower cross member 42 of the link mechanism 25. Thus, the headlamp 81 is disposed at a relatively low position. Consequently, the leaning vehicle 1 according to this embodiment not only reduces the tread width but also has a sufficient area for the upper and lower reflectors 90A and 90B of the headlamp 81, while enabling disposition of the headlamp 81 at the relatively low position.

In the above embodiment, the LEDs 101 to 105 are examples of the luminous elements. Each luminous element of the headlamp 81 is not limited to an LED. Each luminous element may be an electric light bulb, for example.

In the above embodiment, the upper light source 100A includes three LEDs, i.e., the LEDs 101, 102, and 103, and the lower light source 100B includes two LEDs, i.e., the LEDs 104 and 105. The number of LEDs included in the upper light source 100A is not limited to three. The number of LEDs included in the lower light source 100B is not limited to two. In one example, the upper light source 100A may include two LEDs, and the lower light source 100B may include a single LED. In another example, the upper light source 100A may include four or more LEDs, and the lower light source 100B may include three or more LEDs. The same goes for the reflector elements, because each reflector element is provided in association with one of the luminous elements.

In the above embodiment, the reflector elements 91 and 92 are laterally continuous with each other, the reflector elements 92 and 93 are laterally continuous with each other, and the reflector elements 94 and 95 are laterally continuous with each other in the front view of the leaning vehicle 1. The reflector elements 94 and 95 may be spaced from each other as long as the distance between the reflector elements 94 and 95 is shorter than the length of each of the reflector elements 94 and 95 in the right-left direction in the front view of the leaning vehicle 1.

In the above embodiment, the steering shaft 14 is a single shaft. Alternatively, the steering shaft 14 may include a plurality of shafts. In one example, the steering shaft 14 may include: a first shaft to which the handlebar 15 is secured; a second shaft disposed in front of the first shaft; and a connecter connecting the first and second shafts to each other.

In the above embodiment, the tie rod 50 is disposed rearward of the center axis 10c of the head pipe 10 in the front-rear direction of the body frame 13. Alternatively, the tie rod 50 may be disposed forward of the center axis 10c of the head pipe 10 in the front-rear direction of the body frame 13.

Although the body cover 74 includes the center tunnel 72 in the above embodiment, the center tunnel 72 is not an essential element. The body cover 74 may include no center tunnel 72.

The power unit 2 is not limited to any particular configuration. The power unit 2 may include, for example, an internal combustion engine and/or an electric motor.

### REFERENCE SIGNS LIST

- 1: leaning vehicle
- 10: head pipe
- 13: body frame
- 14: steering shaft
- 20L: left front wheel
- 20R: right front wheel
- 25: link mechanism
- 30L: left front wheel support
- 30R: right front wheel support
- 34L: left side member
- 34R: right side member
- 80: front cover
- 81: headlamp
- 90A: upper reflector
- 90B: lower reflector
- 91, 92, 93, 94, 95: reflector element
- 100A: upper light source
- 100B: lower light source
- 101, 102, 103, 104, 105: LED (luminous element)
- CL: vehicle center line
- H1: upper link axis
- H2: lower link axis
- V2L: left steering axis
- V2R: right steering axis

## Claims

1. A leaning vehicle configured to lean rightward in making a right turn and to lean leftward in making a left turn, the vehicle comprising:
a body frame (13) including a head pipe (10);
a steering shaft (14) rotatably supported by the head pipe (10);
a left front wheel (20L) disposed to the left of a vehicle center line (CL);
a right front wheel (20R) disposed to the right of the vehicle center line (CL);
a left front wheel support (30L) supporting the left front wheel (20L) such that the left front wheel (20L) is rotatable;
a right front wheel support (30R) supporting the right front wheel (20R) such that the right front wheel (20R) is rotatable;
a left side member (34L) supporting the left front wheel support (30L) such that the left front wheel support (30L) is rotatable around a left steering axis (V2L) extending in an up-down direction of the body frame (13);
a right side member (34R) supporting the right front wheel support (30R) such that the right front wheel support (30R) is rotatable around a right steering axis (V2R) extending in the up-down direction of the body frame (13);
a link mechanism (25) coupled to the body frame (13), the left side member (34L), and the right side member (34R) such that the link mechanism (25) is rotatable relative to the body frame (13), the left side member (34L), and the right side member (34R) around link axes (H1, H2) extending in a front-rear direction of the body frame (13), the link mechanism (25) being configured to change relative positions of the left front wheel (20L) and the right front wheel (20R) in the up-down direction of the body frame (13) in accordance with a lean of the body frame (13);
a front cover (80) secured to the body frame (13), at least a portion of the front cover (80) being disposed forward of the steering shaft (14) and the link mechanism (25); and a headlamp (81) attached to the front cover (80), at least a portion of the headlamp (81) being located on the vehicle center line (CL), the headlamp (81) being disposed forward of the link mechanism (25) in the front-rear direction of the body frame (13), wherein the headlamp (81) includes
an upper light source (100A) including a plurality of luminous elements (101, 102, 103) aligned laterally in a front view of the vehicle,
a lower light source (100B) including a single or a plurality of luminous elements (104, 105) disposed below the upper light source (100A) in the front view of the vehicle, the plurality of luminous elements (104, 105) being aligned laterally in the front view of the vehicle,
an upper reflector (90A) including a plurality of reflector elements (91, 92, 93) each associated with one of the luminous elements (101, 102, 103) of the upper light source (100A), the upper reflector (90A) being configured to forwardly reflect light emitted from the luminous elements (101, 102, 103) of the upper light source (100A), and
a lower reflector (90B) including a single reflector element (94, 95) associated with the single luminous element (104, 105) of the lower light source (100B) or a plurality of reflector elements (94, 95) each associated with one of the plurality of luminous elements (104, 105) of the lower light source (100B), the lower reflector (90B) being configured to forwardly reflect light emitted from the single or plurality of luminous elements (104, 105) of the lower light source (100B),
adjacent ones of the reflector elements (91, 92, 93) of the upper reflector (90A) are disposed laterally adjacent to each other, wherein a distance between the reflector elements (91, 92, 93) of the upper reflector (90A) being laterally adjacent to each other is zero in a right-left direction in a front view of the leaning vehicle (1), and
when the leaning vehicle is in an upright position and at rest on a horizontal plane, with the leaning vehicle not being steered, a length (L1) between right and left ends of the lower light source (100B) is shorter than a length (L2) between right and left ends of the upper light source (100A) in the front view of the vehicle, and a horizontal distance (L3) between the left end of the lower light source (100B) and the left end of the upper light source (100A) is equal to a horizontal distance (L4) between the right end of the lower light source (100B) and the right end of the upper light source (100A) in the front view of the vehicle.

2. The leaning vehicle according to claim 1, wherein when the leaning vehicle is in the upright position and at rest on the horizontal plane, with the leaning vehicle not being steered, the left end of the upper light source (100A) including the plurality of luminous elements (101, 102, 103) aligned laterally in the front view of the vehicle is disposed rightward of a right end of the left front wheel support (30L) in the front view of the vehicle, and the right end of the upper light source (100A) including the plurality of luminous elements (101, 102, 103) aligned laterally in the front view of the vehicle is disposed leftward of a left end of the right front wheel support (30R) in the front view of the vehicle.

3. The leaning vehicle according to claim 1 or 2, wherein when the leaning vehicle is in the upright position and at rest on the horizontal plane, with the leaning vehicle not being steered, the lower light source (100B) is disposed forward of the upper light source (100A) in the front-rear direction of the body frame (13).

4. The leaning vehicle according to any one of claims 1 to 3, wherein when the leaning vehicle is in the upright position and at rest on the horizontal plane, with the leaning vehicle not being steered, a front end of the lower reflector (90B) is located forward of a front end of the upper reflector (90A) in the front-rear direction of the body frame (13).

5. The leaning vehicle according to any one of claims 1 to 4, wherein when the leaning vehicle is in the upright position and at rest on the horizontal plane, with the leaning vehicle not being steered, the lower light source (100B) is disposed forward of a wheel axis (H3) of the left front wheel (20L) and a wheel axis (H3) of the right front wheel (20R) in the front-rear direction of the body frame (13) in a side view of the vehicle.

6. The leaning vehicle according to any one of claims 1 to 5, wherein the number of laterally aligned luminous elements (101, 102, 103) of the upper light source (100A) is N, where N is a natural number equal to or greater than two, and
the number of luminous elements (104, 105) of the lower light source (100B) is N - 1.

7. The leaning vehicle according to claim 6, wherein the single luminous element (104, 105) or each of the plurality of luminous elements (104, 105) of the lower light source (100B) is disposed between two adjacent ones of the luminous elements (101, 102, 103) of the upper light source (100A) in a right-left direction of the body frame (13).

8. The leaning vehicle according to any one of claims 1 to 7, further comprising:
a left position lamp (82L) disposed leftward of the left end of the upper light source (100A) in a right-left direction of the body frame (13), the upper light source (100A) including the plurality of luminous elements (101, 102, 103) aligned laterally in the front view of the vehicle; and
a right position lamp (82R) disposed rightward of the right end of the upper light source (100A) in the right-left direction of the body frame (13), the upper light source (100A) including the plurality of luminous elements (101, 102, 103) aligned laterally in the front view of the vehicle.

9. The leaning vehicle according to any one of claims 1 to 8, wherein the link mechanism (25) includes
an upper cross member (41) coupled to the body frame (13), the left side member (34L), and the right side member (34R) such that the upper cross member (41) is rotatable relative to the body frame (13), the left side member (34L), and the right side member (34R) around upper link axes (H1) extending in the front-rear direction of the body frame (13), and
a lower cross member (42) coupled to the body frame (13), the left side member (34L), and the right side member (34R) such that the lower cross member (42) is rotatable relative to the body frame (13), the left side member (34L), and the right side member (34R) around lower link axes (H2) extending in the front-rear direction of the body frame (13), the lower cross member (42) being disposed below the upper cross member (41) in the up-down direction of the body frame (13), and
a lower end (90Ab) of the upper reflector (90A) is located below an upper end (42t) of the lower cross member (42).

## Patentansprüche

1. Ein Neigungs-Fahrzeug, konfiguriert, um sich nach rechts zu neigen, wenn es eine Rechtskurve macht, und nach links zu neigen, wenn eine Linkskurve macht, das Fahrzeug umfasst:
einen Körper-Rahmen (13), der ein Kopf-Rohr (10) beinhaltet;
eine Lenk-Welle (14), die drehbar durch das Kopf-Rohr (10) gelagert ist;
ein linkes Vorder-Rad (20L), das links von einer Fahrzeug-Mittel-Linie (CL) positioniert ist;
ein rechtes Vorder-Rad (20R), das rechts von der Fahrzeug-Mittel-Linie (CL) positioniert ist;
eine linke Vorder-Rad-Lagerung (30L), die das linke Vorder-Rad (20L) lagert, so dass das linke Vorder-Rad (20L) drehbar ist;
eine rechte Vorder-Rad-Lagerung (30R), die das rechte Vorder-Rad (20R) lagert, so dass das rechte Vorder-Rad (20R) drehbar ist;
ein linkes Seiten-Element (34L), das die linke Vorder-Rad-Lagerung (20L) lagert, so dass die linke Vorder-Rad-Lagerung (30L) um eine linke Lenk-Achse (V2L) drehbar ist, die sich in einer Oben-Unten-Richtung des Körper-Rahmens (13) erstreckt;
ein rechtes Seiten-Element (34R), das die rechte Vorder-Rad-Lagerung (30R) lagert, so dass die rechte Vorder-Rad-Lagerung (30R) um eine rechte Lenk-Achse (V2R) drehbar ist, die sich in die Oben-Unten-Richtung des Körper-Rahmens (13) erstreckt;
einen Lenker-Mechanismus (25), der mit dem Körper-Rahmen (13), dem linken Seiten-Element (34L) und dem rechten Seiten-Element (34R) gekoppelt ist, so dass der Lenker-Mechanismus (25) relativ zu dem Körper-Rahmen (13), dem linken Seiten-Element (34L) und dem rechten Seiten-Element (34R) um Lenker-Achsen (H1, H2) drehbar ist, die sich in einer Vorder-Rück-Richtung des Körper-Rahmens (13) erstrecken, der Lenker-Mechanismus (25) ist konfiguriert, um relative Positionen des linken Vorder-Rads (20L) und des rechten Vorder-Rads (20R) in der Oben-Unten-Richtung des Körper-Rahmens (13) in Übereinstimmung mit einer Neigung des Körper-Rahmens (13) zu ändern;
eine Vorder-Abdeckung (80), die an dem Körper-Rahmen (13) gesichert ist,
zumindest ein Abschnitt von der Vorder-Abdeckung (80) ist vor der Lenk-Welle (14) und dem Lenker-Mechanismus (25) positioniert; und
einen Scheinwerfer (81), der an der Vorder-Abdeckung (80) angebracht ist,
zumindest ein Abschnitt des Scheinwerfers (81) ist auf der Fahrzeug-Mittel-Linie (CL) angeordnet, der Scheinwerfer (81) ist vor dem Lenker-Mechanismus (25) in der Vorder-Rück-Richtung des Körper-Rahmens (13) positioniert, wobei der Scheinwerfer (81) beinhaltet
eine obere Lichtquelle (100A), die eine Mehrzahl von Leucht-Elementen (101, 102, 103) beinhaltet, die quer ausgerichtet sind, in einer Vorder-Ansicht des Fahrzeugs, eine untere Lichtquelle (100B), die ein einziges oder eine Mehrzahl von Leucht-Elementen (104, 105) beinhaltet, die unterhalb der oberen Lichtquelle (100A), in der Vorder-Ansicht des Fahrzeugs, positioniert sind, die Mehrzahl von Leucht-Elementen (104, 105) ist quer ausgerichtet, in der Vorder-Ansicht des Fahrzeugs,
einen oberen Reflektor (90A), der eine Mehrzahl von Reflektor-Elementen (91, 92, 93) beinhaltet, jedes zu einem von den Leucht-Elementen (101, 102, 103) der oberen Lichtquelle (100A) zugeordnet, der obere Reflektor (90A) ist konfiguriert, um Licht, emittiert von den Leucht-Elementen (101, 102, 103) von der oberen Lichtquelle (100A), nach vorne zu reflektieren, und
einen unteren Reflektor (90B), der ein einzelnes Reflektor-Element (94, 95), zugeordnet zu dem einzigen Leucht-Element (104, 105) der unteren Lichtquelle (100B), oder eine Mehrzahl von Reflektor-Elementen (94, 95) beinhaltet, jedes zugeordnet zu einem von der Mehrzahl der Leucht-Elemente (104, 105) von der unteren Lichtquelle (100B), der untere Reflektor (90B) ist konfiguriert, um Licht, emittiert von dem einzigen oder der Mehrzahl von Leucht-Elementen (104, 105) von der unteren Lichtquelle (100B), nach vorne zu reflektieren,
benachbarte von den Reflektor-Elementen (91, 92, 93) von dem oberen Reflektor (90A) sind quer benachbart zueinander positioniert, wobei ein Abstand zwischen den Reflektor-Elementen (91, 92, 93) von dem oberen Reflektor (90A), die quer benachbart zueinander sind, null ist, in einer Rechts-Links-Richtung, in einer Vorder-Ansicht des Neigungs-Fahrzeugs (1),
wenn das Neigungs-Fahrzeug in einer aufrechten Position ist und in einer Horizontal-Ebene geparkt ist, mit dem Neigungs-Fahrzeug nicht gelenkt, ist eine Länge (L1) zwischen rechten und linken Enden von der unteren Lichtquelle (100B) kürzer als eine Länge (L2) zwischen rechten und linken Enden von der oberen Lichtquelle (100A), in der Vorder-Ansicht des Fahrzeugs, und ein Horizontal-Abstand (L3) zwischen dem linken Ende der unteren Lichtquelle (100B) und dem linken Ende der oberen Lichtquelle (100A) ist gleich mit einem Horizontal-Abstand (L4) zwischen dem rechten Ende von der unteren Lichtquelle (100B) und dem rechten Ende von der oberen Lichtquelle (100A), in der Vorder-Ansicht des Fahrzeugs.

2. Das Neigungs-Fahrzeug gemäß Anspruch 1, wobei, wenn das Neigungs-Fahrzeug in der aufrechten Position ist und in der Horizontal-Ebene geparkt ist, mit dem Neigungs-Fahrzeug nicht gelenkt, ist das linke Ende der oberen Lichtquelle (100A), welche die Mehrzahl von Leucht-Elementen (101, 102, 103) beinhaltet, die quer ausgerichtet sind, in der Vorder-Ansicht des Fahrzeugs, rechts von einem rechten Ende von der linken Vorder-Rad-Lagerung (30L) positioniert, in der Vorder-Ansicht von dem Fahrzeug, und das rechte Ende der oberen Lichtquelle (100A), welche die Mehrzahl von Leucht-Elementen (101, 102, 103) beinhaltet, die quer ausgerichtet sind, in der Vorder-Ansicht des Fahrzeugs, ist links von einem linken Ende von der rechten Vorder-Rad-Lagerung (30R) positioniert, in der Vorder-Ansicht des Fahrzeugs.

3. Das Neigungs-Fahrzeug gemäß Anspruch 1 oder 2, wobei, wenn das Neigungs-Fahrzeug in der aufrechten Position ist und in der Horizontal-Ebene geparkt ist, mit dem Neigungs-Fahrzeug nicht gelenkt, ist die untere Lichtquelle (100B) vor der oberen Lichtquelle (100A) positioniert, in der Vorder-Rück-Richtung des Körper-Rahmens (13).

4. Das Neigungs-Fahrzeug gemäß zu irgendeinem der Ansprüche 1 bis 3, wobei, wenn das Neigungs-Fahrzeug in der aufrechten Position ist und in der Horizontal-Ebene geparkt ist, mit dem Neigungs-Fahrzeug nicht gelenkt, ist ein vorderes Ende des unteren Reflektors (90B) vor einem vorderen Ende von dem oberen Reflektor (90A) angeordnet, in der Vorder-Rück-Richtung des Körper-Rahmens (13).

5. Das Neigungs-Fahrzeug gemäß zu irgendeinem der Ansprüche 1 bis 4, wobei, wenn das Neigungs-Fahrzeug in der aufrechten Position ist und in der Horizontal-Ebene geparkt ist, mit dem Neigungs-Fahrzeug nicht gelenkt, ist die untere Lichtquelle (100B) vor einer Rad-Achse (H3) von dem linken Vorder-Rad (20L) und einer Rad-Achse (H3) von dem rechten Vorder-Rad (20R) positioniert, in der Vorder-Rück-Richtung von dem Körper-Rahmen (13), in einer Seiten-Ansicht von dem Fahrzeug.

6. Das Neigungs-Fahrzeug gemäß zu irgendeinem der Ansprüche 1 bis 5, wobei die Anzahl von quer ausgerichteten Leucht-Elemente (101, 102, 103) der oberen Lichtquelle (100A) N ist, wobei N eine natürliche Zahl gleich oder größer als zwei ist, und
die Anzahl der Leucht-Elemente (104, 105) der unteren Lichtquelle (100B) ist N - 1.

7. Das Neigungs-Fahrzeug gemäß Anspruch 6, wobei das einzelne Leucht-Element (104, 105) oder jedes von der Mehrzahl der Leucht-Elemente (104, 105) der unteren Lichtquelle (100B) zwischen zwei benachbarten von den Leucht-Elementen (101, 102, 103) von der oberen Lichtquelle (100A) positioniert ist, in einer Rechts-Links-Richtung des Körper-Rahmens (13).

8. Das Neigungs-Fahrzeug gemäß zu irgendeinem der Ansprüche 1 bis 7, das weiter umfasst:
eine linke Positions-Leuchte (82L), die links von einem linken Ende von der oberen Lichtquelle (100A) positioniert ist, in der Rechts-Links-Richtung des Körper-Rahmens (13), die obere Lichtquelle (100A) beinhaltet eine Mehrzahl von Leucht-Elementen (101, 102, 103), die quer ausgerichtet sind, in der Vorder-Ansicht von dem Fahrzeug; und
eine rechte Positions-Leuchte (82R), die rechts von dem rechten Ende der oberen Lichtquelle (100A) positioniert ist, in der Rechts-Links-Richtung von dem Körper-Rahmen (13), die obere Leuchtquelle (100A) beinhaltet die Mehrzahl von Leucht-Elementen (101, 102, 103), die quer ausgerichtet sind, in der Vorder-Ansicht von dem Fahrzeug.

9. Das Neigungs-Fahrzeug gemäß zu irgendeinem der Ansprüche 1 bis 8, wobei der Lenker-Mechanismus (25) beinhaltet:
ein oberes Quer-Element (41), das mit dem Körper-Rahmen (13), dem linken Seiten-Element (34L) und dem rechten Seiten-Element (34R) gekoppelt ist, so dass das obere Quer-Element (41) zu dem Körper-Rahmen (13), dem linken Seiten-Element (34L) und dem rechten Seiten-Element (34R) um eine obere Lenker-Achse (H1) relativ drehbar ist, die sich in der Vorder-Rück-Richtung von dem Körper-Rahmen (13) erstreckt,
ein unteres Quer-Element (42), das mit dem Körper-Rahmen (13), dem linken Seiten-Element (34L) und dem rechten Seiten-Element (34R) gekoppelt ist, so dass das untere Quer-Element (42) zu dem Körper-Rahmen (13), dem linken Seiten-Element (34L) und dem rechten Seiten-Element (34R) um untere Lenker-Achsen (H2) ist relativ drehbar ist, die sich in der Vorder-Rück-Richtung von dem Körper-Rahmen (13) erstrecken, das untere Quer-Element (42) ist unterhalb des oberen Quer-Elements (41) positioniert, in der Oben-Unten-Richtung des Körper-Rahmens (13), und
ein unteres Ende (90Ab) von dem oberen Reflektor (90A) ist unterhalb eines oberen Endes (42t) von dem oberen Quer-Element (42) angeordnet.

## Revendications

1. Véhicule inclinable configuré pour s'incliner à droite lors d'un virage à droite et pour s'incliner à gauche lors d'un virage à gauche, le véhicule comprenant :
un corps de châssis (13) comprenant un tube de tête (10) ;
un axe de direction (14) supporté de manière rotative par le tube de tête (10) ;
une roue avant gauche (20L) disposée à gauche d'une ligne centrale du véhicule (CL) ;
une roue avant droite (20R) disposée à droite de la ligne centrale du véhicule (CL) ;
un support de roue avant gauche (30L) supportant la roue avant gauche (20L) de telle sorte que la roue avant gauche (20L) soit rotative ;
un support de roue avant droite (30R) supportant la roue avant droite (20R) de telle sorte que la roue avant droite (20R) soit rotative ;
un élément côté gauche (34L) supportant le support de la roue avant gauche (30L) de telle sorte que le support de la roue avant gauche (30L) soit rotatif autour d'un axe de direction gauche (V2L) qui s'étend en direction haut-bas du corps de châssis (13) ;
un élément côté droit (34R) supportant le support de la roue avant droite (30R) de telle sorte que le support de la roue avant droite (30R) soit rotatif autour d'un axe de direction droit (V2R) qui s'étend en direction haut-bas du corps de châssis (13) ;
un mécanisme de liaison (25) couplé au corps de châssis (13), à l'élément côté gauche (34L) et à l'élément côté droit (34R) de telle sorte que le mécanisme de liaison (25) soit rotatif par rapport au corps de châssis (13), à l'élément côté gauche (34L) et à l'élément côté droit (34R) autour d'axes de liaison (H1, H2) qui s'étendent en direction avant-arrière du corps de châssis (13), le mécanisme de liaison (25) étant configuré pour changer les positions relatives de la roue avant gauche (20L) et de la roue avant droite (20R) en direction haut-bas du corps de châssis (13) conformément à l'inclinaison du corps de châssis (13) ;
un carénage avant (80) fixé au corps de châssis (13), au moins une portion du carénage avant (80) étant disposée à l'avant de l'axe de direction (14) et du mécanisme de liaison (25) ; et
un phare (81) attaché au carénage avant (80), au moins une portion du phare (81) étant située sur la ligne centrale du véhicule (CL), le phare (81) étant disposé à l'avant du mécanisme de liaison (25) en direction avant-arrière du corps de châssis (13), dans lequel le phare (81) comprend :
une source de lumière supérieure (100A) comprenant une pluralité d'éléments lumineux (101, 102, 103) alignés latéralement en vue de face du véhicule,
une source de lumière inférieure (100B) comprenant un ou plusieurs éléments lumineux (104, 105) disposés au-dessous de la source de lumière supérieure (100A) en vue de face du véhicule, les éléments de la pluralité d'éléments lumineux (104, 105) étant alignés latéralement en vue de face du véhicule,
un réflecteur supérieur (90A) comportant une pluralité d'éléments réflecteurs (91, 92, 93) associés chacun à l'un des éléments lumineux (101, 102, 103) de la source de lumière supérieure (100A), le réflecteur supérieur (90A) étant configuré pour réfléchir vers l'avant la lumière émise par les éléments lumineux (101, 102, 103) de la source de lumière supérieure (100A), et
un réflecteur inférieur (90B) comprenant un élément réflecteur unique (94, 95) associé à l'élément lumineux unique (104, 105) de la source de lumière inférieure (100B) ou une pluralité d'éléments réflecteurs (94, 95) associés chacun à un élément de la pluralité d'éléments lumineux (104, 105) de la source de lumière inférieure (100B), le réflecteur inférieur (90B) étant configuré pour réfléchir vers l'avant la lumière émise par lesdits un ou plusieurs éléments lumineux (104, 105) de la source de lumière inférieure (100B),
dans lequel les éléments adjacents desdits éléments réflecteurs (91, 92, 93) du réflecteur supérieur (90A) sont disposés latéralement de manière adjacente entre eux, et la distance entre les éléments réflecteurs (91, 92, 93) du réflecteur supérieur (90A) qui sont latéralement adjacents entre eux est nulle en direction droite-gauche en vue de face du véhicule inclinable (1), et
quand le véhicule inclinable est en position debout et repose sur un plan horizontal, alors que le véhicule inclinable n'est pas dirigé, la longueur (L1) entre les extrémités droite et gauche de la source de lumière inférieure (100B) est inférieure à la longueur (L2) entre les extrémités droite et gauche de la source de lumière supérieure (100A) en vue de face du véhicule, et la distance horizontale (L3) entre l'extrémité gauche de la source de lumière inférieure (100B) et l'extrémité gauche de la source de lumière supérieure (100A) est égale à la distance horizontale (L4) entre l'extrémité droite de la source de lumière inférieure (100B) et l'extrémité droite de la source de lumière supérieure (100A) en vue de face du véhicule.

2. Véhicule inclinable selon la revendication 1, dans lequel, quand le véhicule inclinable est en position debout et repose sur le plan horizontal, alors que le véhicule inclinable n'est pas dirigé, l'extrémité gauche de la source de lumière supérieure (100A) comprenant la pluralité d'éléments lumineux (101, 102, 103) alignés latéralement en vue de face du véhicule est disposée à droite d'une extrémité droite du support de roue avant gauche (30L) en vue de face du véhicule, et l'extrémité droite de la source de lumière supérieure (100A) comprenant la pluralité d'éléments lumineux (101, 102, 103) alignés latéralement en vue de face du véhicule est disposée à gauche d'une extrémité gauche du support de roue avant droite (30R) en vue de face du véhicule.

3. Véhicule inclinable selon la revendication 1 ou 2, dans lequel, quand le véhicule inclinable est en position debout et repose sur le plan horizontal, alors que le véhicule inclinable n'est pas dirigé, la source de lumière inférieure (100B) est disposée en avant de la source de lumière supérieure (100A) en direction avant-arrière du corps de châssis (13).

4. Véhicule inclinable selon l'une quelconque des revendications 1 à 3, dans lequel, quand le véhicule inclinable est en position debout et repose sur le plan horizontal, alors que le véhicule inclinable n'est pas dirigé, une extrémité avant du réflecteur inférieur (90B) se trouve en avant d'une extrémité avant du réflecteur supérieur (90A) en direction avant-arrière du corps de châssis (13).

5. Véhicule inclinable selon l'une quelconque des revendications 1 à 4, dans lequel, quand le véhicule inclinable est en position debout et repose sur le plan horizontal, alors que le véhicule inclinable n'est pas dirigé, la source de lumière inférieure (100B) est disposée en avant de l'axe de roue (H3) de la roue avant gauche (20L) et de l'axe de roue (H3) de la roue avant droite (20R) en direction avant-arrière du corps de châssis (13) en vue latérale du véhicule.

6. Véhicule inclinable selon l'une quelconque des revendications 1 à 5, dans lequel le nombre d'éléments lumineux alignés latéralement (101, 102, 103) de la source de lumière supérieure (100A) est N, où N est un nombre naturel supérieur ou égal à deux, et le nombre d'éléments lumineux (104, 105) de la source de lumière inférieure (100B) est N - 1.

7. Véhicule inclinable selon la revendication 6, dans lequel l'élément lumineux unique (104, 105) de chaque élément de la pluralité d'éléments lumineux (104, 105) de la source de lumière inférieure (100B) est disposé entre deux éléments lumineux adjacents (101, 102, 103) de la source de lumière supérieure (100A) en direction droite-gauche du corps de châssis (13).

8. Véhicule inclinable selon l'une quelconque des revendications 1 à 7, comprenant en outre :
un feu de position gauche (82L) disposé à gauche de l'extrémité gauche de la source de lumière supérieure (100A) en direction droite-gauche du corps de châssis (13), la source de lumière supérieure (100A) comprenant la pluralité d'éléments lumineux (101, 102, 103) alignés latéralement en vue de face du véhicule ; et
un feu de position droit (82R) disposé à droite de l'extrémité droite de la source de lumière supérieure (100A) en direction droite-gauche du corps de châssis (13), la source de lumière supérieure (100A) comprenant la pluralité d'éléments lumineux (101, 102, 103) alignés latéralement en vue de face du véhicule.

9. Véhicule inclinable selon l'une quelconque des revendications 1 à 8, dans lequel le mécanisme de liaison (25) comprend
un élément d'entretoise supérieur (41) couplé au corps de châssis (13), à l'élément côté gauche (34L) et à l'élément côté droit (34R) de telle sorte que l'élément d'entretoise supérieur (41) soit rotatif par rapport au corps de châssis (13), à l'élément côté gauche (34L) et à l'élément côté droit (34R) autour d'axes de liaison supérieurs (H1) qui s'étendent en direction avant-arrière du corps de châssis (13), et
un élément d'entretoise inférieur (42) couplé au corps de châssis (13), à l'élément côté gauche (34L) et à l'élément côté droit (34R) de telle sorte que l'élément d'entretoise inférieur (42) soit rotatif par rapport au corps de châssis (13), à l'élément côté gauche (34L) et à l'élément côté droit (34R) autour d'axes de liaison inférieurs (H2) qui s'étendent en direction avant-arrière du corps de châssis (13), l'élément d'entretoise inférieur (42) étant disposé au-dessous de l'élément d'entretoise supérieur (41) en direction haut-bas du corps de châssis (13), et
une extrémité inférieure (90Ab) du réflecteur supérieur (90A) est située au-dessous d'une extrémité supérieure (42t) de l'élément d'entretoise inférieur (42).
